# EUROPÄISCHE PATENTANMELDUNG

(11) **EP 4 086 026 A1**
(43) Veröffentlichungstag der Anmeldung: **09.11.2022**
(21) Anmeldenummer: 22170401.8
(22) Anmeldetag: 28.04.2022
(51) Int. Cl.: B23B 31/08, B23B 31/00

(54) **ZERSPANUNGSWERKZEUG**

(30) Priorität: 05.05.2021 AT 5010121 U
(71) Anmelder: CERATIZIT Austria Gesellschaft m.b.H., 6600 Reutte (AT)
(72) Erfinder: SINGER-SCHNÖLLER, Alexander, 6671 Weißenbach (AT); VOGG, Christopher, 82491 Grainau (DE)
(74) Vertreter: Ciesla, Dirk

(57) **Zusammenfassung**

Zerspanungswerkzeug (1), wobei das Zerspanungswerkzeug (1) ein Antriebsglied (2), einen auf das Antriebsglied (2) reversibel lösbar aufgesetzten sowie zumindest abschnittsweise aus einem Stahl gebildeten Werkzeugkopf (3), mindestens ein Mitnehmerelement (4) und mindestens ein Dämpfungselement (5) hat, wobei das Mitnehmerelement (4) den Werkzeugkopf (3) mit dem Antriebsglied (2) koppelt, so dass der Werkzeugkopf (3) von dem Antriebsglied (2) in einem angetriebenen Zustand des Antriebsglied (2)s um eine bezüglich des Antriebsglieds (2) innere Drehachse (6) gedreht wird, wobei eine relative Werkzeugkopfdrehung von dem Werkzeugkopf (3) zu dem Antriebsglied (2) bezüglich der Drehachse (6) freigegeben ist, wobei das Zerspanungswerkzeug (1) eine Arretiervorrichtung (7) hat, wobei das Zerspanungswerkzeug (1) ferner eine Hauptdrehlagereinheit (11) hat, wobei die Hauptdrehlagereinheit (11) derart ausgebildet und angeordnet ist, dass wenn die Arretiervorrichtung (7) mit dem Antriebsglied (2) synchron mitdrehbar verbunden ist, der Werkzeugkopf (3) unter der relativen Werkzeugkopfdrehung relativ zu der Arretiervorrichtung (7) drehbar ist.

## Beschreibung

Die vorliegende Erfindung betrifft ein Zerspanungswerkzeug, wobei das Zerspanungswerkzeug ein Antriebsglied, einen auf das Antriebsglied reversibel lösbar aufgesetzten sowie zumindest abschnittsweise aus einem Stahl oder einem Hartmetall gebildeten Werkzeugkopf, mindestens ein Mitnehmerelement und mindestens ein Dämpfungselement hat, wobei das Mitnehmerelement den Werkzeugkopf mit dem Antriebsglied koppelt, so dass der Werkzeugkopf von dem Antriebsglied in einem angetriebenen Zustand des Antriebsglieds um eine bezüglich des Antriebsglieds innere Drehachse gedreht wird, wobei eine relative Werkzeugkopfdrehung von dem Werkzeugkopf zu dem Antriebsglied bezüglich der Drehachse freigegeben ist, wobei das Dämpfungselement von dem Mitnehmerelement unter der relativen Werkzeugkopfdrehung verformt wird.

Die vorliegende Erfindung liegt auf dem Gebiet von Zerspanungswerkzeugen, die gegen stoßartige Belastungen beim Zerspanen, etwa aufgrund eines diskontinuierlichen Eingriffs in ein zu zerspanendes Werkzeug, gedämpft sind.

Die DE 202 03 391 U1 zeigt eine Handfräsmaschine mit einem elastischen Dämpfungselement, über welches die Handfräsmaschine mit Wirkung entgegen ihrer Umlaufrichtung abstützbar ist.

Die in der DE 202 03 391 U1 gezeigte Handfräsmaschine hat den Nachteil, dass ihr Dämpfungselement unter einer axialen Arretierung eines Werkzeugkopfs komprimiert werden würde, wodurch das Dämpfungselement härter wird und somit weniger dämpfen kann.

Die Aufgabe der vorliegenden Erfindung besteht darin, ein Zerspanungswerkzeug bereitzustellen, das unter einer axialen Arretierung des Werkzeugkopfs eine bessere Dämpfung gegen stoßartige Belastungen beim Zerspanen hat.

Die technische Aufgabe der vorliegenden Erfindung wird durch den Gegenstand von Anspruch 1 gelöst. Vorteilhafte Weiterbildungen der Erfindung sind den abhängigen Ansprüchen, die untereinander frei kombinierbar sind, der Beschreibung und den Figuren zu entnehmen.

Gemäß der vorliegenden Erfindung hat das Zerspanungswerkzeug ein Antriebsglied, einen auf das Antriebsglied reversibel lösbar aufgesetzten sowie zumindest abschnittsweise aus einem Stahl oder einem Hartmetall gebildeten Werkzeugkopf, mindestens ein Mitnehmerelement und mindestens ein Dämpfungselement, wobei das Mitnehmerelement den Werkzeugkopf mit dem Antriebsglied koppelt, so dass der Werkzeugkopf von dem Antriebsglied in einem angetriebenen Zustand des Antriebsglieds um eine bezüglich des Antriebsglieds innere Drehachse gedreht wird, wobei eine relative Werkzeugkopfdrehung von dem Werkzeugkopf zu dem Antriebsglied bezüglich der Drehachse freigegeben ist, wobei das Dämpfungselement von dem Mitnehmerelement unter der relativen Werkzeugkopfdrehung verformt wird, wobei das Zerspanungswerkzeug ferner eine Arretiervorrichtung hat, wobei die Arretiervorrichtung den Werkzeugkopf in axialer Richtung bezüglich der Drehachse gegen eine Bewegung weg von dem Antriebsglied sperrt, wobei das Zerspanungswerkzeug ferner eine Hauptdrehlagereinheit hat, wobei die Hauptdrehlagereinheit derart ausgebildet und angeordnet ist, dass wenn die Arretiervorrichtung mit dem Antriebsglied synchron mitdrehbar verbunden ist, der Werkzeugkopf unter der relativen Werkzeugkopfdrehung relativ zu der Arretiervorrichtung drehbar ist, oder dass wenn der Werkzeugkopf mit der Arretiervorrichtung synchron mitdrehbar verbunden ist, das Antriebsglied relativ zu der Arretiervorrichtung drehbar ist.

Der Werkzeugkopf wird also in einer durch die Arretiervorrichtung vorgegebenen axialen Position arretiert und kann zugleich um die Drehachse relativ zu dem Antriebsglied gedreht werden. Die durch das Dämpfungselement bereitgestellte Dämpfung wird von der axialen Position des Werkzeugkopfs entkoppelt. Stoßartige Belastungen beim Zerspanen lassen sich dadurch unabhängig von der axialen Position des Werkzeugkopfs im jeweils gleichen Ausmaß dämpfen.

Die relative Werkzeugkopfdrehung hat vorzugsweise einen bezüglich der Drehachse bemessenen maximalen Drehwinkel im Bereich von 0,1° bis 60°. Denn bei einem maximalen Drehwinkel von mehr als 60° besteht bezüglich einer Bruchgefahr von dem Mitnehmerelement und/oder dem Werkzeugkopf die Gefahr, dass das Mitnehmerelement zu weit in das Dämpfungselement eindringt und so zu wenig gedämpft wird. Bei einem maximalen Drehwinkel kleiner 0,1° besteht bezüglich einer Bruchgefahr von dem Mitnehmerelement und/oder dem Werkzeugkopf hingegen die Gefahr, dass das Mitnehmerelement zu wenig in das Dämpfungselement eindringt und so zu wenig gedämpft wird. Noch mehr bevorzugt ist daher ein maximalen Drehwinkel im Bereich 1° bis 50°, noch mehr bevorzugt von 5° bis 30° und am meisten bevorzugt von 5° bis 15°.

Das Zerspanungswerkzeug kann auch so ausgebildet sein, dass das Zerspanungswerkzeug einen Einstellmechanismus zum reversiblen Vorspannen des Dämpfungselements, so dass das Dämpfungselement härter bzw. weicher gemacht werden kann.

Das Dämpfungselement ist zumindest weicher als das Mitnehmerelement und weicher als ein das Dämpfungselement kontaktierender Aufnahmebereich, wobei der Aufnahmebereich aufseiten des Werkzeugkopfs und/oder aufseiten des Antriebsglieds ausgebildet und angeordnet sein kann.

Das Dämpfungselement kann einteilig oder mehrteilig ausgebildet sein. Letzteres zum Beispiel durch mehrere Teildämpfungselemente mit der gleichen oder derart verschiedenen Härte gegen das Eindringen des Mitnehmerelements, dass mindestens zwei der Teildämpfungselemente eine zueinander verschiedene Härte haben.

Das Dämpfungselement ist vorzugsweise in einer Aufnahmenut des Werkzeugkopfs angeordnet. Vorzugsweise ist die Aufnahmenut monolithisch umfänglich und/oder monolithisch stirnseitig geschlossen ausgebildet. Denn dies gewährleistet jeweils einen besonders guten Schutz des Dämpfungselements vor bezüglich des Zerspanungswerkzeugs äußeren Umwelteinflüssen.

Das Mitnehmerelement ist vorzugsweise reversibel lösbar sowie synchron mitdrehbar mit dem Antriebsglied oder dem Werkzeugkopf verbunden, zum Beispiel durch mindestens eine Schraube. Vorzugsweise ist die Schraube im Wesentlichen, vorzugsweise gänzlich, parallel zur Drehachse ausgerichtet, weil die Schraube dadurch bezüglich einer Montage leichter zugänglich wird. Denkbar und auch möglich ist aber auch eine im Wesentlichen senkrechte Anordnung von der Schraube bezüglich der Drehachse.

Das Mitnehmerelement hält vorzugsweise einen in axialer Richtung bezüglich der Drehachse bemessenen Spalt zu dem Werkzeugkopf ein. Dadurch wird eine axiale Kollision von dem Mitnehmerelement mit dem Werkzeugkopf verhindert.

Vorzugsweise sind mindestens zwei Mitnehmerelemente vorgesehen, weil dies eine noch robustere Übertragung der Drehung von dem Antriebsglied auf den Werkzeugkopf bereitstellt. Vorzugsweise sind die zwei Mitnehmerelemente bezüglich der Drehachse diametral zueinander angeordnet und jeweils reversibel lösbar mit dem Antriebsglied verbunden.

Die Hauptdrehlagereinheit und das Dämpfungselement können in Blickrichtung senkrecht zur Drehachse zumindest teilweise überlappend angeordnet sein. Dadurch wird eine besonders kompakte Bauweise des Zerspanungswerkzeugs in bezüglich der Drehachse axialer Richtung bereitgestellt.

Die Hauptdrehlagereinheit kann vorzugsweise reversibel lösbar jeweils mit dem Werkzeugkopf und dem Antriebsglied verbunden sein, zum Beispiel indem die Hauptdrehlagereinheit aufseiten des Werkzeugkopfs in den Werkzeugkopf eingepresst ist und aufseiten des Antriebsglieds auf das Antriebsglied aufgepresst ist. Letzteres entweder direkt auf das Antriebsglied oder auf ein Zwischenstück, wobei das Zwischenstück, zum Beispiel eine Distanzhülse, auf das Antriebsglied aufgepresst ist.

Die Drehachse verläuft vorzugsweise parallel zu einer Längsachse des Antriebsglieds, wobei sich das Antriebsglied entlang der Drehachse erstreckt.

Der Werkzeugkopf kann zum Beispiel durch additive Herstellung hergestellt sein, zum Beispiel indem Stahlpulver oder Hartmetallpulver jeweils schichtweise aufgeschmolzen und erstarrt wird, zum Beispiel durch einen Energiestrahl, vorzugsweise einen Laserstrahl.

Der Werkzeugkopf kann einteilig oder mehrteilig ausgebildet sein. Der Werkzeugkopf kann ferner mindestens einen in den Werkzeugkopf eingelassenen Aufnahmesitz zur Aufnahme eines Schneidelements haben, insbesondere wenn der Werkzeugkopf einteilig ausgebildet ist. Der Werkzeugkopf kann bereits mit mindestens einem Schneidelement bestückt sein. Vorzugsweise wird das Schneidelement durch eine Befestigungsschraube reversibel lösbar in dem Aufnahmesitz gehalten, weil dies den Austausch und die Montage des Schneidelements erleichtert. Denkbar und auch möglich ist es aber auch, dass das Schneidelement und der Werkzeugkopf eine gesinterte monolithische Einheit bilden.

Das Antriebsglied kann einteilig oder mehrteilig ausgebildet sein. Das Antriebsglied kann einen Hohlschaftkegelabschnitt haben, der von dem Werkzeugkopf abgewandt angeordnet ist und zum reversibel lösbaren Verbinden mit einer Maschinenschnittstelle ausgebildet ist.

Die Arretiervorrichtung kann einteilig oder mehrteilig ausgebildet sein. Wenn die Arretiervorrichtung einteilig ausgebildet ist, kann die Arretiervorrichtung lediglich eine Spannschraube haben oder als monolithischer Zapfen des Werkzeugkopfs ausgebildet sein, wobei die Spannschraube in das Antriebsglied eingeschraubt ist bzw. der Zapfen in einer Bohrung des Antriebsglied gehalten wird. Wenn die Arretiervorrichtung mehrteilig ausgebildet ist, kann die Arretiervorrichtung eine Spannschraube und mindestens eine Hülse haben, wobei die Spannschraube durch die mindestens eine Hülse durchgeführt angeordnet und in das Antriebsglied eingeschraubt ist, wobei die Hauptdrehlagereinheit gegen einen Schraubenkopf der Spannschraube direkt oder indirekt abgestützt ist. Direkt heißt dabei, dass die Hauptdrehlagereinheit den Schraubenkopf kontaktiert, indirekt, dass die Hauptdrehlagereinheit mindestens eine Unterlegscheibe der Arretiervorrichtung kontaktiert und die Unterlegscheibe oder ein anderes Unterlegelement, welches als länglicher Hülsenkörper ausgebildet sein kann, den Schraubenkopf kontaktiert.

Vorzugsweise hat das Zerspanungswerkzeug eine innere Kühlmittelkanalstruktur, die insbesondere für den Transport von Druckluft durch das Antriebsglied und von dem Antriebsglied zu dem Werkzeugkopf ausgebildet ist, wobei zum Beispiel mindestens ein Kühlmittelkanal der Kühlmittelkanalstruktur in dem Werkzeugkopf so ausgebildet und angeordnet ist, dass ein Schneidelement des Werkzeugkopfs mit Druckluft versorgt werden kann. Denkbar und auch möglich ist aber auch ein von Druckluft verschiedenes Kühlmittel, zum Beispiel eine Kühlmittelflüssigkeit.

Vorzugsweise durchdringt die Kühlmittelkanalstruktur das Dämpfungselement, so dass das Dämpfungselement das Kühlmittel weiterleiten kann. Dies trägt zu einer kompakten Bauweise des Zerspanungswerkzeugs bei.

Unter dem Stahl ist ein Werkstoff zu verstehen, dessen Massenanteil von Eisen größer ist als der jedes anderen Elements, dessen Kohlenstoffgehalt im Allgemeinen kleiner als zwei Gewichtsprozent ist und andere Element enthalten kann. Denkbar und auch möglich sind aber auch chromhaltige Stähle, die mehr als zwei Gewichtsprozent Kohlenstoffgehalt enthalten.

Unter dem Hartmetall (cemented carbide) ist ein Verbundwerkstoff zu verstehen, wobei der Verbundwerkstoff eine Gerüststruktur hat, wobei die Gerüststruktur durch Hartstoffpartikel gebildet wird und Zwischenräume hat.

Die Hartstoffpartikel können insbesondere zumindest überwiegend durch Wolframkarbid, Titankarbid und/oder Titankarbonitrid gebildet sein, wobei in geringeren Mengen zusätzlich z. B. auch andere Hartstoffpartikel, insbesondere Karbide der Elemente der Gruppen IV bis VI des Periodensystems, vorhanden sein können.

Die Zwischenräume sind mit einem metallischen Zwischenraummaterial gefüllt, wobei das Zwischenraummaterial zumindest überwiegend aus Cobalt, Nickel, Eisen oder einer Basislegierung von zumindest einem dieser Elemente gebildet ist. Es können allerdings in geringeren Mengen auch noch andere Elemente in dem metallischen Zwischenraummaterial gelöst sein.

Unter einer Basislegierung ist zu verstehen, dass dieses Element den überwiegenden Bestandteil der Legierung bildet. Am häufigsten kommt Hartmetall zum Einsatz, bei dem die Hartstoffpartikel zumindest überwiegend durch Wolframkarbid gebildet sind und das Zwischenraummaterial eine Cobalt- oder Cobalt-Nickel-Basislegierung ist; der Gewichtsanteil der entsprechenden Wolframkarbid-Partikel beträgt dabei insbesondere mindestens 70 Gewichtsprozent, vorzugsweise mehr als 80 Gewichtsprozent, am meisten bevorzugt mehr als 90 Gewichtsprozent.

Gemäß einer Weiterbildung ist die Hauptdrehlagereinheit derart ausgebildet und angeordnet, dass der Werkzeugkopf unter der relativen Werkzeugkopfdrehung relativ zu der Arretiervorrichtung drehbar ist, wobei die Arretiervorrichtung mit dem Antriebsglied synchron mitdrehbar verbunden ist, wobei die Arretiervorrichtung durch die Hauptdrehlagereinheit durchgeführt angeordnet ist, wobei die Arretiervorrichtung in das Antriebsglied eingeschraubt oder auf das Antriebsglied aufgeschraubt ist, so dass die Arretiervorrichtung durch einen Gewindeeingriff jeweils in axialer Richtung bezüglich der Drehachse gegen eine Bewegung weg von dem Antriebsglied gesperrt ist. Der Werkzeugkopf ist also um die Arretiervorrichtung drehbar gelagert. Dies erlaubt es, die bezüglich der Drehachse radiale Abmessung der Arretiervorrichtung aufseiten der Hauptdrehlagereinheit zu variieren und so an das Antriebsglied und/oder den Werkzeugkopf anzupassen, so kann zum Beispiel die Arretiervorrichtung im Querschnitt verstärkt werden, wenn das Gewicht des Werkzeugkopfs zunimmt. Aufgeschraubt bedeutet, dass die Arretiervorrichtung ein Innengewinde hat, also zum Beispiel als Gewindespannring ausgebildet ist, der mit einem Außengewinde des Antriebsglieds im Gewindeeingriff steht. Eingeschraubt bedeutet, dass die Arretiervorrichtung ein Außengewinde hat, das mit einem Innengewinde des Antriebsglieds im Gewindeeingriff steht. Die Arretiervorrichtung ist also in beiden Fällen mit dem Antriebsglied reversibel lösbar verbunden, was den Austausch der Arretiervorrichtung erleichtert und die Funktion der Arretiervorrichtung dahin gehend erweitert, dass die Arretiervorrichtung eine Vorspannung auf die Hauptdrehlagereinheit ausüben kann. So nimmt die Vorspannung zu, wenn die Arretiervorrichtung in Richtung auf das Antriebsglied zu geschraubt wird. Der Gewindeeingriff wirkt selbsthemmend bezüglich einer Rückstellung der Arretiervorrichtung.

Gemäß einer Weiterbildung hat die Hauptdrehlagereinheit einen ersten Lagerring und einen zweiten Lagerring, wobei der erste Lagerring unter der relativen Werkzeugkopfdrehung relativ zu dem zweiten Lagerring gedreht wird, wobei der erste Lagerring von dem Werkzeugkopf synchron mitdrehbar getragen wird und der zweite Lagerring von der Arretiervorrichtung oder von dem Antriebsglied synchron mitdrehbar getragen wird. Die Hauptdrehlagereinheit hat also zumindest den ersten Lagerring und den zweiten Lagerring. Diese Lagerringe wirken derart zusammen, dass die relative Werkzeugkopfdrehung unter einem reduzierten Reibungswiderstand stattfinden kann, entweder durch einen direkten Kontakt von dem ersten Lagerring mit dem zweiten Lagerring oder durch einen indirekten Kontakt, wonach zwischen dem ersten Lagerring und dem zweiten Lagerring Reibungsreduktionskörper, zum Beispiel Wälzkörper, angeordnet sind.

Gemäß einer Weiterbildung ist zwischen dem ersten Lagerring und dem zweiten Lagerring der Hauptdrehlagereinheit eine Mehrzahl von Wälzkörpern angeordnet, wobei die Wälzkörper jeweils den ersten Lagerring und den zweiten Lagerring der Hauptdrehlagereinheit kontaktieren. Die Hauptdrehlagereinheit ist also nach dieser Weiterbildung als Wälzlager ausgebildet. Die Wälzkörper sorgen für eine besonders große Reduktion der Reibung zwischen dem ersten Lagerring und dem zweiten Lagerring, was einem Ruckgleiten (Stick-Slip-Effekt) entgegengewirkt.

Gemäß einer Weiterbildung hat das Zerspanungswerkzeug ferner eine Distanzhülse, wobei die Distanzhülse auf das Antriebsglied aufgeschoben angeordnet ist und drehfest mit dem Antriebsglied verbunden ist, wobei die Distanzhülse den inneren Lagerring drehfest trägt. Dies hat den Vorteil, dass die Hauptdrehlagereinheit an verschiedene Abmessungen des Antriebsglieds, insbesondere Durchmesser, mithilfe der Distanzhülse angepasst werden kann. Die Distanzhülse ist vorzugsweise auf das Antriebsglied drehfest aufgeschrumpft angeordnet und befestigt. Eine in axialer Richtung der Drehachse bemessene Länge der Distanzhülse kann außerdem so eingestellt werden, dass die Drehlagereinheit auf einer vorgegebenen axialen Position bezüglich der Drehachse gehalten wird.

Gemäß einer Weiterbildung hat das Zerspanungswerkzeug eine Nebendrehlagereinheit, wobei die Nebendrehlagereinheit derart ausgebildet und angeordnet ist, dass die relative Werkzeugkopfdrehung weiterhin freigegeben ist, wobei der Werkzeugkopf durch die Nebendrehlagereinheit in axialer Richtung bezüglich der Drehachse gegen das Antriebsglied direkt oder indirekt abgestützt wird. Die Nebendrehlagereinheit stabilisiert den Werkzeugkopf in axialer Richtung bezüglich der Drehachse, so dass eine besonders präzise Zerspanung mit dem Zerspanungswerkzeug möglich ist. Direkt abgestützt heißt, dass die Nebendrehlagereinheit das Antriebsglied kontaktiert, indirekt, dass die Nebendrehlagereinheit ein mit dem Antriebsglied synchron mitdrehbar verbundenes Element, zum Beispiel eine Trägerhülse, kontaktiert.

Gemäß einer Weiterbildung hat die Nebendrehlagereinheit einen ersten Lagerring und einen zweiten Lagerring, wobei der erste Lagerring unter der relativen Werkzeugkopfdrehung relativ zu dem zweiten Lagerring gedreht wird, wobei der erste Lagerring von dem Werkzeugkopf synchron mitdrehbar getragen wird und der zweite Lagerring von dem Antriebsglied synchron mitdrehbar getragen wird. Die Nebendrehlagereinheit hat also zumindest den ersten Lagerring und den zweiten Lagerring. Diese Lagerringe wirken derart zusammen, dass die relative Werkzeugkopfdrehung weiterhin unter einem reduzierten Reibungswiderstand stattfinden kann, entweder durch einen direkten Kontakt von dem ersten Lagerring mit dem zweiten Lagerring oder durch einen indirekten Kontakt, wonach zwischen dem ersten Lagerring und dem zweiten Lagerring Reibungsreduktionskörper, zum Beispiel Wälzkörper, angeordnet sind.

Gemäß einer Weiterbildung ist zwischen dem ersten Lagerring und dem zweiten Lagerring der Nebendrehlagereinheit eine Mehrzahl von Wälzkörpern angeordnet, wobei die Wälzkörper jeweils den ersten Lagerring und den zweiten Lagerring der Nebendrehlagereinheit kontaktieren. Die Nebendrehlagereinheit ist also nach dieser Weiterbildung als Wälzlager ausgebildet. Die Wälzkörper sorgen für eine besonders große Reduktion der Reibung zwischen dem ersten Lagerring und dem zweiten Lagerring, was einem Ruckgleiten (Stick-Slip-Effekt) entgegengewirkt.

Gemäß einer Weiterbildung hat die Nebendrehlagereinheit eine Mehrzahl von Wälzkörpern, wobei der Werkzeugkopf eine Wälzkörperaufnahme hat, wobei das Antriebsglied eine Wälzkörperaufnahme hat, wobei die Wälzkörper von der Nebendrehlagereinheit jeweils die Wälzkörperaufnahme von dem Werkzeugkopf und die Wälzkörperaufnahme von dem Antriebsglied kontaktieren. Die Wälzköperaufnahme von dem Werkzeugkopf kann eine monolithische Einheit mit dem Werkzeugkopf bilden oder als Lagerring ausgebildet sein. Die Wälzkörperaufnahme von dem Antriebselement kann eine monolithische Einheit mit dem Antriebsglied bilden oder als Lagerring ausgebildet sein.

Gemäß einer Weiterbildung ist die Arretiervorrichtung auf die Hauptdrehlagereinheit und die Nebendrehlagereinheit jeweils eine axiale Druckvorspannung ausübend ausgebildet und angeordnet, wobei die Arretiervorrichtung ein bezüglich der Drehachse axial verstellbares Spannelement zur reversiblen Einstellung der Druckvorspannung hat. Die Arretiervorrichtung sorgt also dafür, dass die Hauptdrehlagereinheit und die Nebendrehlagereinheit gegeneinander vorgespannt werden, und zwar einstellbar. Das Zerspanungswerkzeug wird dadurch in axialer Richtung bezüglich der Drehachse im Bereich des Werkzeugkopfs steifer gemacht, was unter anderem die Lebensdauer der Hauptdrehlagereinheit und der Nebendrehlagereinheit erhöht und das Betriebsspiel dieser beiden Lagereinheiten reduziert. Das Spannelement kann zum Beispiel als Schraube oder als Mutter ausgebildet sein.

Gemäß einer Weiterbildung sind die Hauptdrehlagereinheit und die Nebendrehlagereinheit jeweils als Kegelrollenlager ausgebildet. Die Hauptdrehlagereinheit und die Nebendrehlagereinheit können dadurch besonders gut radiale und auch axiale Belastungen aufnehmen. Das Zerspanungswerkzeug kann also unter Beibehaltung der relativen Werkzeugkopfdrehungen Belastungen beim Zerspanen besser aufnehmen.

Gemäß einer Weiterbildung sind die Wälzkörper der Hauptdrehlagereinheit und die Wälzkörper der Nebendrehlagereinheit in einer O-Anordnung zueinander bezüglich der Drehachse angestellt sowie gegeneinander vorgespannt. Bei der O-Anordnung bilden Drucklinien, die durch die Wälzkörper verlaufen und sich in der Drehachse schneiden, Druckkegel, deren Spitzen voneinander abgewandt sind. Die O-Anordnung bietet eine günstige lagerkinematisch wirksame Lagerdistanz, die größer ist als die konstruktive Axialdistanz von der Hauptdrehlagereinheit zu der Nebendrehlagereinheit, wodurch Vorteile für die Belastbarkeit und Steifigkeit sowie hinsichtlich eines präzisen Laufs des Werkzeugkopfs erzielt werden.

Alternativ denkbar und auch möglich ist aber auch eine X-Anordnung. Bei der X-Anordnung bilden die Drucklinien, die durch die Wälzkörper verlaufen und sich in der Drehachse schneiden, Druckkegel, deren Spitzen einander zugewandt sind. Die X-Anordnung hat den Vorteil, dass sie einen einfacheren Einbau der Hauptdrehlagereinheit und der Nebendrehlagereinheit ermöglicht.

Gemäß einer Weiterbildung hat die Arretiervorrichtung eine Arretierhülse und eine durch die Arretierhülse abschnittsweise durchgeführt angeordnete Halterungsschraube, wobei die Halterungsschraube das Antriebsglieds eingeschraubt ist, wobei die Halterungsschraube eine Auskragung hat, wobei die Auskragung der Halterungsschraube ein bezüglich der Drehachse axiales Entfernen von dem Werkzeugkopf weg von dem Antriebsglied sperrt, wobei die Arretierhülse in axialer Richtung bezüglich der Drehachse direkt oder indirekt auf der Auskragung aufliegt, wobei der Werkzeugkopf in axialer Richtung bezüglich der Drehachse direkt oder indirekt auf der Hülse aufliegt, wobei die Arretierhülse ein Lagerelement der Hauptdrehlagereinheit mit der Arretierhülse synchron mitdrehbar trägt. Die Arretierhülse sorgt dafür, dass die Abmessungen des Lagerelements, bei dem es sich um den zweiten Lagerring der Hauptdrehlagereinheit handeln kann, unabhängig von den Abmessungen der Halterungsschraube, bei der es sich um das Spannelement handeln kann, gewählt werden kann. Der Austausch der Hauptdrehlagereinheit und der Halterungsschraube wird dadurch zudem jeweils erleichtert. Bei der Auskragung der Halterungsschraube kann es sich um einen Schraubenkopf handeln.

Gemäß einer Weiterbildung ist das Dämpfungselement im Wesentlichen durch einen Kunststoff, insbesondere im Wesentlichen durch ein Elastomer, gebildet. Der Kunststoff, insbesondere das Elastomer, haben jeweils besonders gute Dämpfungseigenschaften. Im Wesentlichen durch einen Kunststoff, insbesondere im Wesentlichen ein Elastomer, heißt, dass der Kunststoff bzw. das Elastomer mindestens 51 Gewichtsprozent von dem Dämpfungselement ausmachen, vorzugsweise 100 Gewichtsprozent.

Gemäß einer Weiterbildung hat das Dämpfungselement eine Auskragung, wobei die Auskragung des Dämpfungselements in eine dieser Auskragung folgend ausgebildete Einbuchtung des Werkzeugkopfs eingreift. Dadurch wird das Dämpfungselement reversibel lösbar in dem Werkzeugkopf gehalten, was ein Verrutschen des Dämpfungselements relativ zum Werkzeugkopf verhindert. So kann das Dämpfungselement zum Beispiel L-förmig ausgebildet sein. Denkbar und auch möglich ist es aber auch, dass das Dämpfungselement eine anderes Profil zur Lagesicherung hat.

Gemäß einer Weiterbildung hat das Zerspanungswerkzeug ein weiteres Dämpfungselement, wobei das weitere Dämpfungselement in Umfangsrichtung bezüglich der Drehachse zwischen dem Mitnehmerelement und dem Werkzeugkopf sowie gegenüberliegend von dem Dämpfungselement angeordnet ist. Das weitere Dämpfungselement sorgt dafür, dass der Werkzeugkopf bzw. das Mitnehmerelement in zwei entgegensetzte Drehrichtungen bezüglich der Drehachse gedämpft werden kann. Das weitere Dämpfungselement kann dem Dämpfungselement analog ausgebildet sein.

Gemäß einer Weiterbildung hat der Werkzeugkopf einen Kühlmittelaustritt, wobei der Kühlmittelaustritt derart ausgebildet und angeordnet ist, dass das Dämpfungselement von einem aus dem Kühlmittelaustritt austretenden Kühlmittel zumindest abschnittsweise umströmt wird, wobei der Kühlmittelaustritt mit einer Kühlmittelkanalstruktur des Antriebsglieds kommunizierend verbunden ist. Diese Weiterbildung verhindert ein Überhitzen des Dämpfungselements. Denn aufgrund der Absorption von Stoßenergie durch das Eindringen des Mitnehmerelements in das Dämpfungselement und aufgrund der Erhitzung des Werkzeugkopfs beim Zerspanen steigt die Temperatur des Dämpfungselements an. Die Kühlung des Dämpfungselements wird auch deshalb von Vorteil, um die thermischen Belastungen - hervorgerufen durch den Zerspanungsprozess - vom Dämpfungselement abzuleiten, insbesondere wenn das Dämpfungselement aus einem Elastomer gebildet ist.

Gemäß einer Weiterbildung hat das Dämpfungselement einen internen Kühlmittelkanal, wobei der interne Kühlmittelkanal mit einem Austrittskanal des Werkzeugkopfs kommunizierend verbunden ist, wobei der Austrittskanal zur Kühlmittelspeisung von mindestens einem Kühlmittelauslass des Werkzeugkopfs ausgebildet und angeordnet ist. Der Werkzeugkopf hat also einen Kühlmittelauslass, der mit dem internen Kühlmittelkanal von dem Dämpfungselement so verbunden ist, dass Kühlmittel, zum Beispiel Druckluft, durch das Dämpfungselement strömen und aus dem Dämpfungselement in den Kühlmittelauslass eintreten und von dort austreten kann. Mit Vorteil für eine einfache Herstellung des Werkzeugkopfs wird eine Umleitung des Kühlmittels um das Dämpfungselement herum vermieden. Der interne Kühlmittelkanal ist vorzugsweise mit einer Kühlmittelkanalstruktur des Antriebsglieds kommunizierend verbunden.

Gemäß einer Weiterbildung ist das Zerspanungswerkzeug als Fräswerkzeug ausgebildet, wobei der Werkzeugkopf mindestens einen in den Werkzeugkopf eingelassenen Aufnahmesitz zur reversibel lösbaren Aufnahme eines Schneidelements hat oder wobei der Werkzeugkopf und mindestens ein Schneidelement eine gesinterte Einheit bilden. Dies ist vorteilhaft, weil es gerade beim Fräsen aufgrund des wiederkehrenden Eintretens und Austretens von dem Schneidelement in ein Werkstück jedes Mal zu einer Stoßbelastung des Mitnehmerelements und damit des Werkzeugkopfs kommt, so dass eine Dämpfung des Mitnehmerelements bzw. des Werkzeugkopfs besonders wichtig ist. Der Aufnahmesitz kann eine Auflagefläche haben, wobei die Auflagefläche zum Kontaktieren mit einer Kontaktfläche des Schneidelements ausgebildet ist, wobei die Kontaktfläche des Schneidelements einer aktiven Spanfläche des Schneidelements gegenüberliegend angeordnet sein kann. Die Auflagefläche kann sich bezüglich der Drehachse radial oder tangential erstrecken. Wenn der Werkzeugkopf und das mindestens eine Schneidelement eine gesinterte Einheit bilden, ist es vorteilhaft, wenn der Werkzeugkopf und damit die Schneide aus dem Hartmetall gebildet sind.

Gemäß einer Weiterbildung ist die Hauptdrehlagereinheit und/oder die Nebendrehlagereinheit jeweils als Kugelrollenlager, Kegelrollenlager, Nadellager oder Zylinderrollenlager ausgebildet. Die nach dieser Weiterbildung genannten Wälzlagerausbildungen reduzieren jeweils die Reibung zwischen dem ersten Lagerring und dem zweiten Lagerring der Hauptdrehlagereinheit bzw. der Nebendrehlagereinheit besonders gut.

Weitere Vorteile und Zweckmäßigkeiten der Erfindung ergeben sich anhand der nachfolgenden Beschreibung von einem Ausführungsbeispiel unter Bezugnahme auf die beigefügten Figuren.

Von den Figuren zeigen
- Fig. 1:: eine schematische perspektivische Darstellung eines Zerspanungswerkzeugs gemäß einer Ausführungsform im Bereich eines Werkzeugkopfs;
- Fig. 2:: eine schematische Darstellung einer Stirnseitenansicht des Zerspanungswerkzeugs aus Fig. 1;
- Fig. 3:: eine Schnittdarstellung gemäß den Linien A-A aus Fig. 2;
- Fig. 4:: eine Schnittdarstellung gemäß den Linien B-B aus Fig. 2;
- Fig. 5:: eine Schnittdarstellung gemäß den Linien C-C aus Fig. 3;
- Fig. 6:: einen vergrößerten Bereich von Fig. 5.

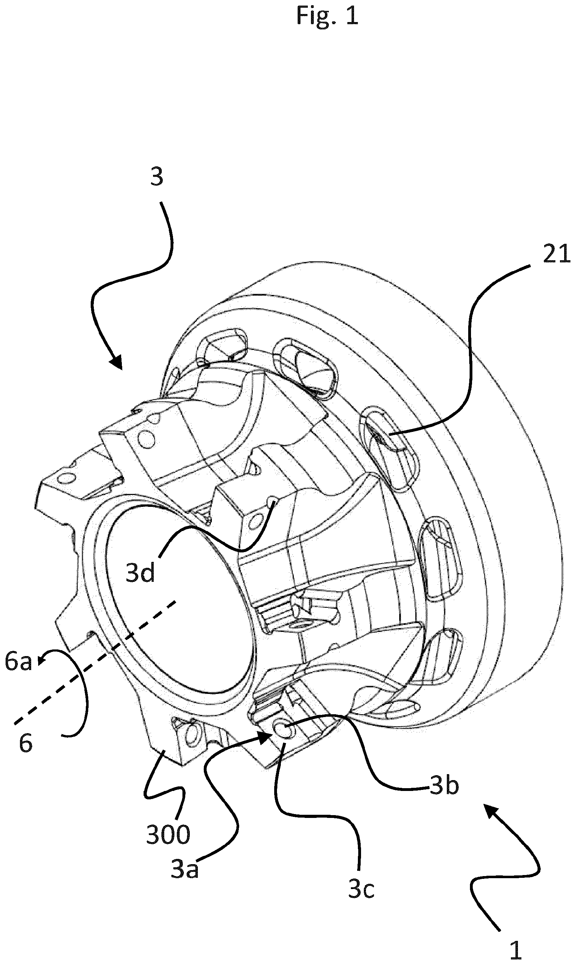

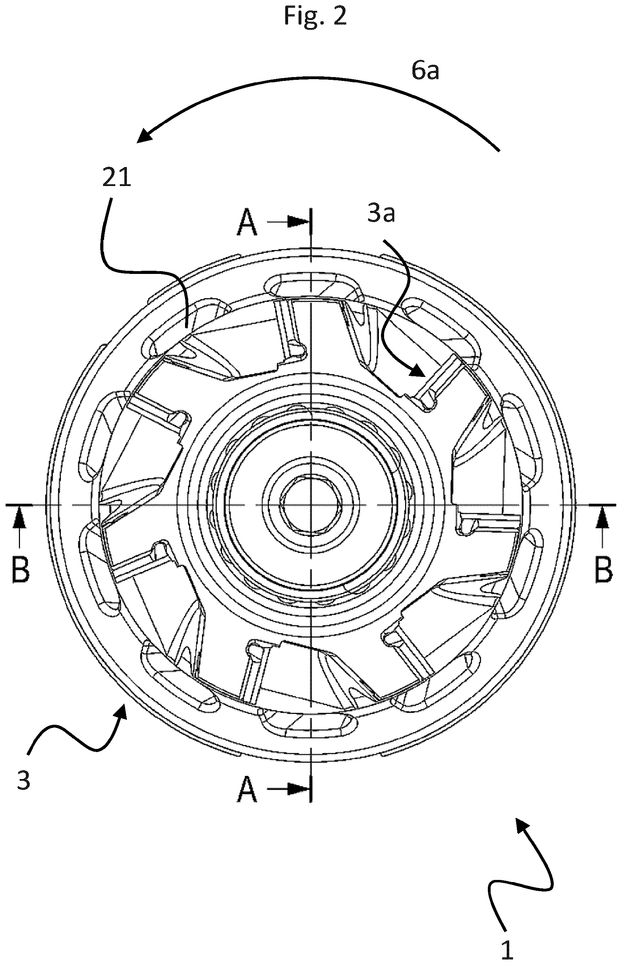

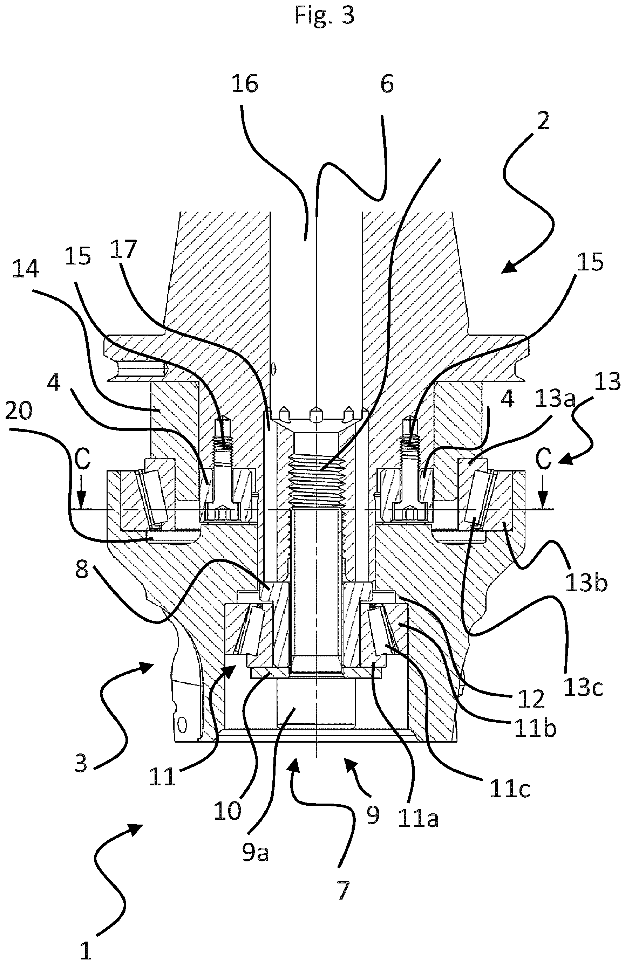

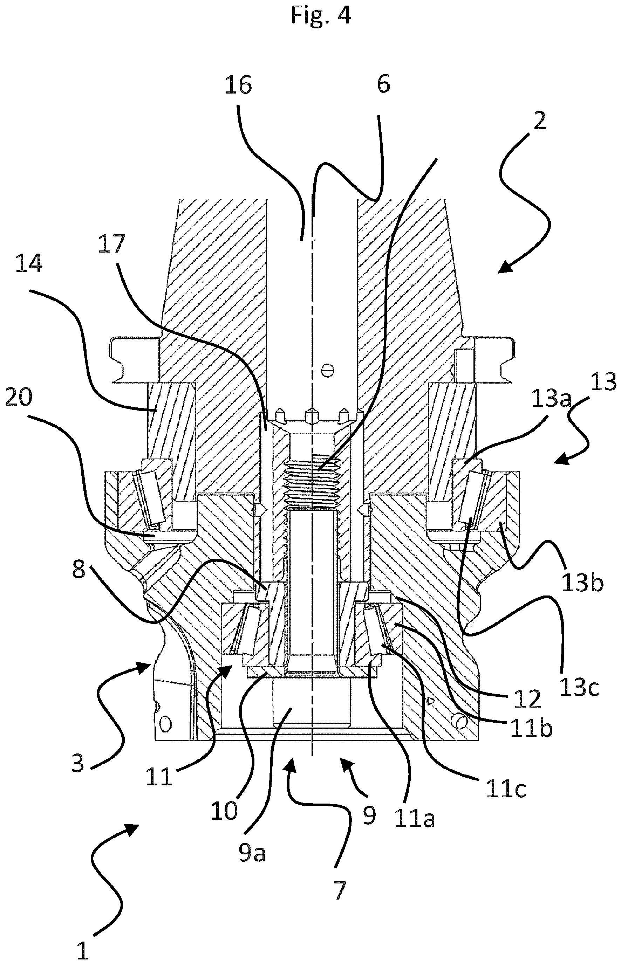

In den Figuren 1 bis 6 ist ein Zerspanungswerkzeug 1 zu sehen, wobei das Zerspanungswerkzeug 1 exemplarisch als Fräswerkzeug ausgebildet ist.

Das Zerspanungswerkzeug 1 hat ein Antriebsglied 2, einen auf das Antriebsglied 2 reversibel lösbar aufgesetzten sowie aus einem Stahl gebildeten Werkzeugkopf 3, zwei diametral zueinander angeordnete Mitnehmerelemente 4 und vier Dämpfungselemente 5, wobei die Dämpfungselemente 5 zu zwei Paaren von jeweils zwei zueinander gegenüberliegenden Dämpfungselementen 5 angeordnet sind.

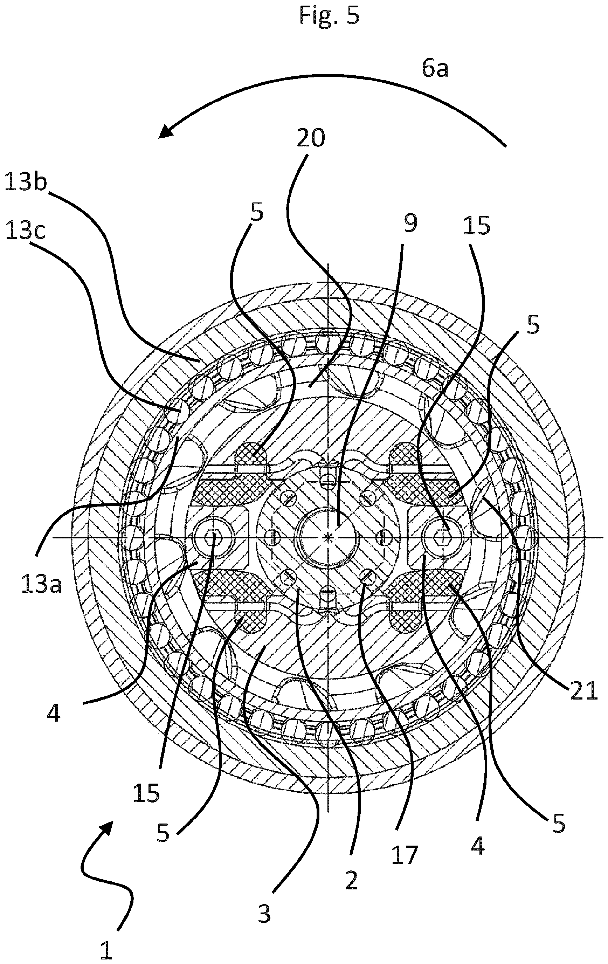

Die Mitnehmerelemente 4 koppeln den Werkzeugkopf 3 mit dem Antriebsglied 2, so dass der Werkzeugkopf 3 von dem Antriebsglied 2 in einem angetriebenen Zustand des Antriebsglieds 2 um eine bezüglich des Antriebsglieds 2 innere Drehachse 6 gedreht wird. Eine relative Werkzeugkopfdrehung von dem Werkzeugkopf 3 zu dem Antriebsglied 2 ist bezüglich der Drehachse 6 freigegeben und erfolgt unter einem Eindringen der Mitnehmerelemente 4 in die Dämpfungselemente 5, die in Richtung der relativen Werkzeugkopfdrehung liegen. Wie insbesondere der Querschnitt in Figur 5 zeigt, sind die Mitnehmerelemente 4 in Umfangsrichtung bezüglich der Drehachse 6 jeweils zwischen zwei der Dämpfungselemente 5 angeordnet.

Die relative Werkzeugkopfdrehung bedeutet, dass das Antriebsglied 2 gegenüber dem Werkzeugkopf 3 stillsteht und der Werkzeugkopf 3 in eine Richtung um die Drehachse 6 gedreht wird. Die relative Werkzeugkopfdrehung kann im Uhrzeigersinn oder gegen den Uhrzeigersinn erfolgen. Die dabei verformten Dämpfungselemente 5 absorbieren die beim Fräsen infolge eines diskontinuierlichen Werkstückkontakts auftretende Stoßenergie. Andernfalls würden die Mitnehmerelemente 4 ungedämpft gegen den Werkzeugkopf 3 angeschlagen.

Das Zerspanungswerkzeug 1 hat ferner eine Arretiervorrichtung 7. Die Arretiervorrichtung 7 sperrt den Werkzeugkopf 3 in axialer Richtung bezüglich der Drehachse 6 gegen eine Bewegung von dem Werkzeugkopf 3 weg von dem Antriebsglied 2, indem der Werkzeugkopf 3 auf einer Arretierhülse 8 aufliegt, wobei die Arretierhülse 8 auf einem Schraubenkopf 9a einer Schraube 9 aufliegt. Zwischen der Schraube 9 und der Arretierhülse 8 ist eine Unterlegscheibe 10 zum Schutz des Schraubenkopfs 9a angeordnet. Die Schraube 9 ist in das Antriebsglied 2 eingeschraubt und so in axialer Richtung bezüglich der Drehachse 6 arretiert, ohne dass die Dämpfungselemente 5 dadurch komprimiert werden. Die Arretierhülse 8, die Schraube 9 (einschließlich ihres Schraubenkopfs 9a) und die Unterlegscheibe 10 sind jeweils Bestandteil der Arretiervorrichtung 7.

Die Arretiervorrichtung 7 ist mit dem Antriebsglied 2 synchron mitdrehbar verbunden. Die Arretierhülse 8 kontaktiert das Antriebsglied 2 reibschlüssig unter einer durch die Schraube 9 aufgebrachten Vorspannkraft, so dass die Arretierhülse 8 mit dem Antriebsglied 2 synchron mitdrehbar verbunden ist. Die Unterlegscheibe 10 kontaktiert den Schraubenkopf 9a und die Arretierhülse 8 unter der durch die Schraube 9 aufgebrachten Vorspannkraft jeweils reibschlüssig, so dass die Unterlegscheibe 10 mit der Schraube 9 und der Arretierhülse 8 synchron mitdrehbar verbunden ist.

Denkbar und auch möglich ist es aber auch, dass die Arretiervorrichtung 7 nur die Schraube 9 (einschließlich ihres Schraubenkopfs 9a) hat, wonach der Werkzeugkopf 3 direkt auf dem Schraubenkopf 9a aufliegt und so gegen eine Bewegung weg von dem Antriebsglied 2 gesperrt wird.

Denkbar und auch möglich ist es aber auch, dass die Arretiervorrichtung 7 nur die Schraube 9 (einschließlich ihres Schraubenkopfs 9a) und die Arretierhülse 8 hat.

Das Zerspanungswerkzeug 1 hat ferner eine Hauptdrehlagereinheit 11. Die Hauptdrehlagereinheit 11 sorgt dafür, dass der Werkzeugkopf 3 unter der relativen Werkzeugkopfdrehung relativ zu der Arretiervorrichtung 7 drehbar ist. Ohne die Hauptdrehlagereinheit 11 würde die relative Werkzeugkopfdrehung durch das Antriebsglied 2 gehemmt werden.

Die Hauptdrehlagereinheit 11 ist exemplarisch als Kegelrollenlager ausgebildet und hat einen inneren Lagerring 11a, einen äußeren Lagerring 11b und eine Mehrzahl von Kegelrollen 11c, die zwischen dem inneren Lagerring 11a und dem äußeren Lagerring 11b angeordnet sind. Der innere Lagerring 11a wird von der Arretierhülse 8 synchron mitdrehbar getragen. Der äußere Lagerring 11b wird von dem Werkzeugkopf 3 synchron mitdrehbar getragen. Unter der relativen Werkzeugkopfdrehung wird also der innere Lagerring 11a relativ zu dem äußeren Lagerring 11b um die Drehachse 6 gedreht.

Der äußere Lagerring 11b schlägt gegen einen radialen Vorsprung 12 von dem Werkzeugkopf 3 an. Der Vorsprung 12 dient also als bezüglich der Drehachse 6 axiales Widerlager für den äußeren Lagerring 11b.

Das Zerspanungswerkzeug 1 hat ferner eine Nebendrehlagereinheit 13. Die Nebendrehlagereinheit 13 ist der Hauptdrehlagereinheit 11 analog aufgebaut. Die Nebendrehlagereinheit 13 hat also einen inneren Lagerring 13a, einen äußeren Lagerring 13b und eine Mehrzahl von Kegelrollen 13c, die zwischen dem inneren Lagerring 13a und dem äußeren Lagerring 13b angeordnet sind. Der innere Lagerring 13a ist mit dem Antriebsglied 2 synchron mitdrehbar verbunden, indem der innere Lagerring 13a von einer Trägerhülse 14 synchron mitdrehbar getragen wird, wobei die Trägerhülse 14 von dem Antriebsglied 2 synchron mitdrehbar getragen wird.

An dieser Stelle wird ausdrücklich festgehalten, dass das Zerspanungswerkzeug 1 auch ohne Trägerhülse 14 ausgebildet sein kann, wonach der innere Lagerring 13a von dem Antriebsglied 2 direkt synchron mitdrehbar getragen wird und der äußere Lagerring 13b von dem Werkzeugkopf 3 synchron mitdrehbar getragen wird.

Denkbar und auch möglich es aber auch, dass das Zerspanungswerkzeug 1 ohne die Lagerringe 13a und 13b und ohne die Trägerhülse 14 ausgebildet ist, wonach die Kegelrollen 11b oder andere Wälzkörper, zum Beispiel Wälzkugeln, in jeweils einer Wälzkörperaufnahme von dem Antriebsglied 2 und dem Werkzeugkopf 3 gelagert sind, wobei die Wälzkörperaufnahme aufseiten des Antriebsglieds 2 eine monolithische Einheit mit dem Antriebsglied 2 bildet und die Wälzkörperaufnahme aufseiten des Werkzeugkopfs 3 eine monolithische Einheit mit dem Werkzeugkopf 3 bildet.

Die Hauptdrehlagereinheit 11 und die Nebendrehlagereinheit 13 sind in axialer Richtung bezüglich der Drehachse 6 gegeneinander vorgespannt, wobei die Kegelrollen 11c and 13c gemäß einer O-Anordnung zueinander angestellt und vorgespannt sind. Die Hauptdrehlagereinheit 11 und die Nebendrehlagereinheit 13 stehen also unter einer axialen Vorspannung. Die axiale Vorspannung wird durch die Schraube 9 aufgebracht. Je tiefer die Schraube 9 in das Antriebsglied 2 eingeschraubt wird, desto größer ist die axiale Vorspannung und umgekehrt.

Die Mitnehmerelemente 4 sind jeweils mittels einer Schraube 15 mit dem Antriebsglied 2 synchron mitdrehbar verbunden und bezüglich der Drehachse 6 axial arretiert. Die Mitnehmerelemente 4 halten jeweils einen bezüglich der Drehachse 6 sich axial erstreckenden Spalt zu dem Werkzeugkopf 3 ein und ragen in den Werkzeugkopf 3 hinein. Die Schrauben 15 erstrecken sich jeweils parallel zu Drehachse 6. Denkbar und auch möglich ist es aber auch, dass sich die Schrauben 15 jeweils senkrecht zur Drehachse 6 erstrecken.

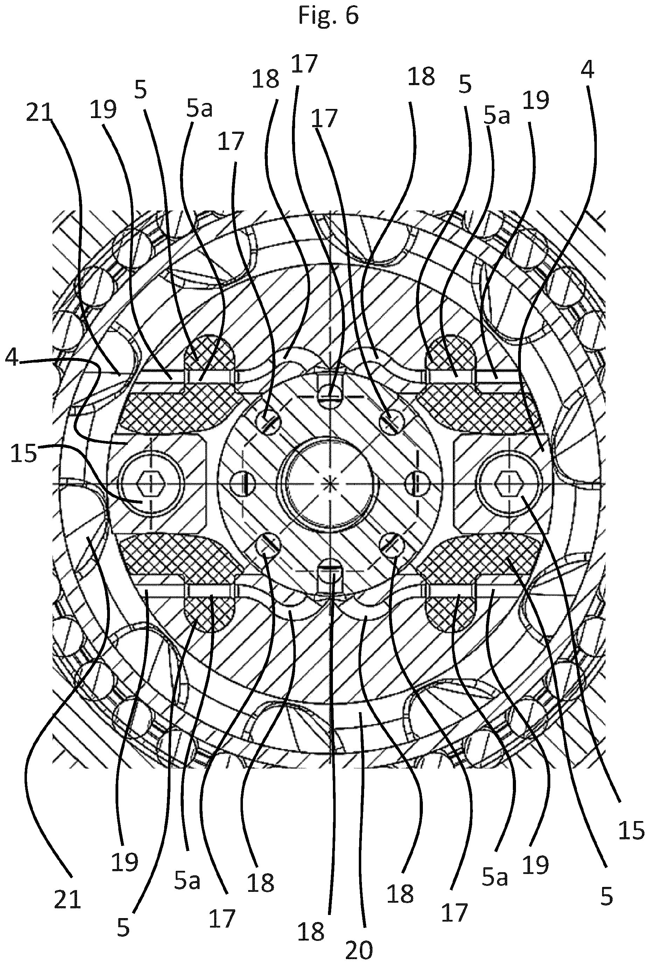

Wie insbesondere die Figur 5 und Figur 6 zeigen, sind die Dämpfungselemente 5 jeweils L-förmig, wobei jeweils ein Schenkel, der auch als Auskragung bezeichnet werden kann, der Dämpfungselemente 5 in das Antriebsglied 2 formschlüssig eingesetzt ist. Die Dämpfungselemente 5 bestehen jeweils aus einem Elastomer und sind weicher als jeweils der Werkzeugkopf 3, die Mitnehmerelemente 4 und das Antriebsglied 2. Denkbar und auch möglich sind aber auch Dämpfungselemente 5, die eine andere Form haben, z. B. T-förmig, doppel-T-förmig, U-förmig, O-förmig, V-förmig, D-förmig, I-förmig, M-förmig, Z-förmig oder ziehharmonikaförmig.

Das Antriebsglied 2 hat einen zentrischen Kühlmittelhauptkanal 16, der die Drehachse 6 als zentrale Achse hat und sich entlang der Drehachse 6 erstreckt. Im Bereich der Trägerhülse 14 zweigen von dem Kühlmittelhauptkanal 16 innerhalb des Antriebsglieds 2 mehrere Kühlmittelnebenkanäle 17 ab, die sich jeweils entlang der Drehachse 6 erstrecken (in den Figuren 5 und 6 ist jeweils nur einer der Kühlmittelnebenkanäle 17 mit dem Bezugszeichen 17 versehen).

Von den Kühlmittelnebenkanälen 17 sind in Figur 6 die bezüglich der Zeichnungsebene und Orientierung von Figur 6 auf den 12-Uhr- und 6-Uhr-Positionen angeordneten Kühlmittelnebenkanäle 17 mit jeweils zwei gekrümmten Abzweigungskanälen 18 von dem Werkzeugkopf 3 fluidkommunizierend verbunden. Unter der relativen Werkzeugkopfdrehung werden die ursprünglich auf den 12-Uhr- und 6-Uhr-Positionen angeordneten Kühlmittelnebenkanäle 17 relativ zu den Abzweigungskanälen 18 gedreht und bleiben mit den Abzweigungskanälen 18 bis zu einem bezüglich der Drehachse 6 bemessenen maximalen Drehwinkel fluidkommunizierend verbunden. Bei mehr als dem maximalen Drehwinkel überlappen sich die ursprünglich auf den 12-Uhr- und 6-Uhr-Positionen angeordneten Kühlmittelnebenkanäle 17 nicht mehr mit den Abzweigungskanälen 18.

Die Dämpfungselemente 5 haben jeweils einen internen Kühlmittelkanal 5a, der jeweils mit einem der Abzweigungskanäle 18 fluidkommunizierend verbunden ist. Die Kühlmittelkanäle 5a sind ferner jeweils mit einem Austrittskanal 19 des Werkzeugkopfs 3 fluidkommunizierend verbunden. Die Austrittskanäle 19 münden jeweils in einen ringförmigen Spalt 20, der zwischen dem Antriebsglied 2 und dem Werkzeugkopf 3 gebildet ist. Von dem Spalt 20 zweigen mehrere Kühlmittelauslässe 21 fluidkommunizierend ab.

Die Kühlmittelauslässe 21 sind so orientiert, dass das Kühlmittel aus jedem der Kühlmittelauslässe 21 mit einer zu einer bezüglich der Drehachse 6 definierten bestimmungsgemäßen Drehrichtung 6a des Zerspanungswerkzeugs 1 entgegensetzten Strömungsrichtungskomponente austreten kann. Unter der Drehrichtung 6a können die Schneidelemente ein Werkstück zerspanen, wobei Späne von einer Spanfläche von den Schneidelementen abgeführt werden.

Mit einer solchen Strömungsrichtungskomponente gelangt das Kühlmittel zu jedem Aufnahmesitz 3a des Werkzeugkopfs 3. In den Aufnahmesitzen 3a befestigte Schneidelemente werden also gekühlt. Bei dem Kühlmittel handelt es sich zum Beispiel um Druckluft, wonach das Zerspanungswerkzeug 1 für eine trockene Zerspanung eines Werkstücks geeignet ist. Denkbar und auch möglich sind aber auch andere Kühlmittelmittel, zum Beispiel flüssige.

Alternativ oder ergänzend kann das Kühlmittel aus den in Fig. 1 ersichtlichen radialen Vorsprüngen 300 in Richtung auf den jeweils dazu in Umfangsrichtung bezüglich der Drehachse 6 gegenüberliegenden Aufnahmesitz 3a austreten und so die Schneidelemente direkt zu kühlen.

Die Aufnahmesitze 3a sind zur Aufnahme jeweils eines nicht dargestellten Schneidelements ausgebildet und angeordnet. Jeder der Aufnahmesitze 3a hat eine Bohrung 3b zur gewindemäßigen Aufnahme jeweils einer nicht dargestellten Befestigungsschraube. Durch die Befestigungsschraube kann das dazu gehörige Schneidelement mit seinem Aufnahmesitz 3a reversibel lösbar verbunden werden, so dass das Schneidelement eine Grundfläche 3c der Aufnahmesitze 3a kontaktiert. Die Aufnahmesitze 3a erstrecken sich bezüglich der Drehachse 6 radial.

Die Dämpfungselemente 5 werden ebenfalls mit dem Kühlmittel, zum Beispiel Druckluft, versorgt, indem aus den in Figur 6 auf den zwischen den 12-Uhr- und 3-Uhr-Positionen, zwischen den 3-Uhr- und 6-Uhr-Positionen, zwischen den 6-Uhr- und 9-Uhr-Positionen und zwischen den 9-Uhr- und 12-Uhr-Positionen angeordneten Kühlmittelnebenkanälen 17 jeweils das Kühlmittel ausströmen und so die Dämpfungselemente 5 jeweils umströmen kann.

Der Werkzeugkopf 3 ist additiv hergestellt, was insbesondere die Formgebung der gekrümmten Abzweigungskanäle 18 ermöglicht. Denkbar und auch möglich ist aber auch eine andere Herstellung.

Der Werkzeugkopf 3 hat jeweils auf der Rückseite der Aufnahmesitze 3a eine abgerundete Kerbe 3d, die den Eingriffswinkel von einem Montagewerkzeug bezüglich der Befestigung von den Schneidelementen erweitert.

Die vorliegende Erfindung ist aber nicht auf das in den Figuren 1 bis 6 gezeigte Zerspanungswerkzeug 1 beschränkt. Denkbar und auch möglich ist es insbesondere, dass das Zerspanungswerkzeug 1 ohne oder mit einer anderen Kühlmittelkanalstruktur ausgebildet ist. Denkbar und auch möglich ist es insbesondere ferner, dass sich die Aufnahmesitze 3a anders erstrecken, zum Beispiel bezüglich der Drehachse 6 tangential.

Denkbar und auch möglich ist es ferner, dass der Werkzeugkopf 3 aus einem Hartmetall (cemented carbide) gebildet ist, wonach der Werkzeugkopf 3 mindestens eine, vorzugsweise mehrere Schneiden hat, wobei die Schneiden mit dem Werkzeugkopf 3 eine monolithische gesinterte Einheit bildet.

Denkbar und auch möglich ist es ferner, dass die Arretiervorrichtung 7 mit dem Werkzeugkopf 3 synchron mitdrehbar verbunden ist und sich dementsprechend relativ zu dem Antriebsglied 2 bezüglich der Drehachse 6 drehen kann.

## Patentansprüche

1. Zerspanungswerkzeug (1), wobei das Zerspanungswerkzeug (1) ein Antriebsglied (2), einen auf das Antriebsglied (2) reversibel lösbar aufgesetzten sowie zumindest abschnittsweise aus einem Stahl oder einem Hartmetall gebildeten Werkzeugkopf (3), mindestens ein Mitnehmerelement (4) und mindestens ein Dämpfungselement (5) hat, wobei das Mitnehmerelement (4) den Werkzeugkopf (3) mit dem Antriebsglied (2) koppelt, so dass der Werkzeugkopf (3) von dem Antriebsglied (2) in einem angetriebenen Zustand des Antriebsglieds (2) um eine bezüglich des Antriebsglieds (2) innere Drehachse (6) gedreht wird, wobei eine relative Werkzeugkopfdrehung von dem Werkzeugkopf (3) zu dem Antriebsglied (2) bezüglich der Drehachse (6) freigegeben ist, wobei das Dämpfungselement (5) von dem Mitnehmerelement (4) unter der relativen Werkzeugkopfdrehung verformt wird, wobei das Zerspanungswerkzeug (1) ferner eine Arretiervorrichtung (7) hat, wobei die Arretiervorrichtung (7) den Werkzeugkopf (3) in axialer Richtung bezüglich der Drehachse (6) gegen eine Bewegung weg von dem Antriebsglied (2) sperrt, wobei das Zerspanungswerkzeug (1) ferner eine Hauptdrehlagereinheit (11) hat, wobei die Hauptdrehlagereinheit (11) derart ausgebildet und angeordnet ist, dass wenn die Arretiervorrichtung (7) mit dem Antriebsglied (2) synchron mitdrehbar verbunden ist, der Werkzeugkopf (3) unter der relativen Werkzeugkopfdrehung relativ zu der Arretiervorrichtung (7) drehbar ist, oder dass wenn der Werkzeugkopf (3) mit der Arretiervorrichtung (7) synchron mitdrehbar verbunden ist, das Antriebsglied (2) relativ zu der Arretiervorrichtung (7) drehbar ist.

2. Zerspanungswerkzeug (1) nach Anspruch 1, wobei die Hauptdrehlagereinheit (11) derart ausgebildet und angeordnet ist, dass der Werkzeugkopf (3) unter der relativen Werkzeugkopfdrehung relativ zu der Arretiervorrichtung (7) drehbar ist, wobei die Arretiervorrichtung (7) mit dem Antriebsglied (2) synchron mitdrehbar verbunden ist, wobei die Arretiervorrichtung (7) durch die Hauptdrehlagereinheit (11) durchgeführt angeordnet ist, wobei die Arretiervorrichtung (7) in das Antriebsglied (2) eingeschraubt oder auf das Antriebsglied (2) aufgeschraubt ist, so dass die Arretiervorrichtung (7) durch einen Gewindeeingriff jeweils in axialer Richtung bezüglich der Drehachse (6) gegen eine Bewegung weg von dem Antriebsglied (2) gesperrt ist.

3. Zerspanungswerkzeug nach Anspruch 2, wobei die Hauptdrehlagereinheit (11) einen ersten Lagerring (11b) und einen zweiten Lagerring (11a) hat, wobei der erste Lagerring (11b) unter der relativen Werkzeugkopfdrehung relativ zu dem zweiten Lagerring (11a) gedreht wird, wobei der erste Lagerring (11b) von dem Werkzeugkopf (3) synchron mitdrehbar getragen wird und der zweite Lagerring (11a) von der Arretiervorrichtung (7) oder dem Antriebsglied (2) synchron mitdrehbar getragen wird.

4. Zerspanungswerkzeug (1) nach Anspruch 3, wobei zwischen dem ersten Lagerring (11b) und dem zweiten Lagerring (11a) der Hauptdrehlagereinheit (11) eine Mehrzahl von Wälzkörpern (11c) angeordnet ist, wobei die Wälzkörper (11c) jeweils den ersten Lagerring (11b) und den zweiten Lagerring (11a) der Hauptdrehlagereinheit (11) kontaktieren.

5. Zerspanungswerkzeug (1) nach einem der vorhergehenden Ansprüche, wobei das Zerspanungswerkzeug (1) eine Nebendrehlagereinheit (13) hat, wobei die Nebendrehlagereinheit (13) derart ausgebildet und angeordnet ist, dass die relative Werkzeugkopfdrehung weiterhin freigegeben ist, wobei der Werkzeugkopf (3) durch die Nebendrehlagereinheit (13) in axialer Richtung bezüglich der Drehachse (6) gegen das Antriebsglied (2) abgestützt wird.

6. Zerspanungswerkzeug (1) nach Anspruch 5, wobei die Nebendrehlagereinheit (13) einen ersten Lagerring (13b) und einen zweiten Lagerring (13a) hat, wobei der erste Lagerring (13b) unter der relativen Werkzeugkopfdrehung relativ zu dem zweiten Lagerring (13a) gedreht wird, wobei der erste Lagerring (13b) von dem Werkzeugkopf (3) synchron mitdrehbar getragen wird und der zweite Lagerring (13a) von dem Antriebsglied (2) synchron mitdrehbar getragen wird.

7. Zerspanungswerkzeug (1) nach Anspruch 6, wobei zwischen dem ersten Lagerring (13b) und dem zweiten Lagerring (13a) der Nebendrehlagereinheit (13) eine Mehrzahl von Wälzkörpern (13c) angeordnet ist, wobei die Wälzkörper (13c) jeweils den ersten Lagerring (13b) und den zweiten Lagerring (13a) der Nebendrehlagereinheit (13) kontaktieren.

8. Zerspanungswerkzeug (1) nach Anspruch 5, wobei die Nebendrehlagereinheit (13) eine Mehrzahl von Wälzkörpern (13c) hat, wobei der Werkzeugkopf (3) eine Wälzkörperaufnahme (13b) hat, wobei das Antriebsglied (2) eine Wälzkörperaufnahme (13a) hat, wobei die Wälzkörper (13c) von der Nebendrehlagereinheit (13) jeweils die Wälzkörperaufnahme (13b) von dem Werkzeugkopf (3) und die Wälzkörperaufnahme (13a) von dem Antriebsglied (2) kontaktieren.

9. Zerspanungswerkzeug (1) nach einem der Ansprüche 5 bis 8, wobei die Arretiervorrichtung (7) auf die Hauptdrehlagereinheit (11) und die Nebendrehlagereinheit (13) jeweils eine axiale Druckvorspannung ausübend ausgebildet und angeordnet ist, wobei die Arretiervorrichtung (7) ein bezüglich der Drehachse (6) axial verstellbares Spannelement (9) zur reversiblen Einstellung der Druckvorspannung hat.

10. Zerspanungswerkzeug (1) nach einem der Ansprüche 5 bis 9, wobei die Hauptdrehlagereinheit (11) und die Nebendrehlagereinheit (13) jeweils als Kegelrollenlager (11, 13) ausgebildet sind.

11. Zerspanungswerkzeug (1) nach Anspruch 10, wobei die Wälzkörper (11c) der Hauptdrehlagereinheit (11) und die Wälzkörper (13c) der Nebendrehlagereinheit (13) in einer O-Anordnung zueinander bezüglich der Drehachse (6) angestellt sowie gegeneinander vorgespannt sind.

12. Zerspanungswerkzeug (1) nach einem der vorhergehenden Ansprüche, wobei die Arretiervorrichtung (7) eine Arretierhülse (8) und eine durch die Arretierhülse (8) abschnittsweise durchgeführt angeordnete Halterungsschraube (9) hat, wobei die Halterungsschraube (9) in das Antriebsglieds (2) eingeschraubt ist, wobei die Halterungsschraube (9) eine Auskragung (9a) hat, wobei die Auskragung (9a) der Halterungsschraube (9) ein bezüglich der Drehachse (6) axiales Entfernen von dem Werkzeugkopf (3) weg von dem Antriebsglied (2) sperrt, wobei die Arretierhülse (8) in axialer Richtung bezüglich der Drehachse (6) direkt oder indirekt auf der Auskragung (9a) aufliegt, wobei der Werkzeugkopf (3) in axialer Richtung bezüglich der Drehachse (6) direkt oder indirekt auf der Arretierhülse (8) aufliegt, wobei die Arretierhülse (8) ein Lagerelement (11a, 11b) der Hauptdrehlagereinheit (11) mit der Arretierhülse (8) synchron mitdrehbar trägt.

13. Zerspanungswerkzeug (1) nach einem der vorhergehenden Ansprüche, wobei der Werkzeugkopf (3) einen Kühlmittelaustritt (17) hat, wobei der Kühlmittelaustritt (17) derart ausgebildet und angeordnet ist, dass das Dämpfungselement (5) von einem aus dem Kühlmittelaustritt (17) austretenden Kühlmittel zumindest abschnittsweise umströmt wird, wobei der Kühlmittelaustritt (17) mit einer Kühlmittelkanalstruktur (16) des Antriebsglieds (2) kommunizierend verbunden ist.

14. Zerspanungswerkzeug (1) nach einem der vorhergehenden Ansprüche, wobei das Dämpfungselement (5) einen internen Kühlmittelkanal (5a) hat, wobei der interne Kühlmittelkanal (5a) mit einem Austrittskanal (19) des Werkzeugkopfs (3) kommunizierend verbunden ist, wobei der Austrittskanal (19) zur Kühlmittelspeisung von mindestens einem Kühlmittelauslass (21) des Werkzeugkopfs (3) ausgebildet und angeordnet ist.

15. Zerspanungswerkzeug (1) nach einem der vorhergehenden Ansprüche, wobei das Zerspanungswerkzeug (1) als Fräswerkzeug (1) ausgebildet ist, wobei der Werkzeugkopf (3) mindestens einen in den Werkzeugkopf (3) eingelassenen Aufnahmesitz (3a) zur reversibel lösbaren Aufnahme eines Schneidelements hat oder wobei der Werkzeugkopf (3) und mindestens ein Schneidelement eine gesinterte Einheit bilden.
